# EUROPEAN PATENT SPECIFICATION

(11) **EP 0 238 757 B1**
(45) Date of publication and mention of the grant of the patent: **22.02.1995**
(21) Application number: 86309829.9
(22) Date of filing: 16.12.1986
(51) Int. Cl.: B62D 33/08, B60J 7/00

(54) **Improvements in and relating to a roof raising mechanism for a trailer or van body construction**
Dachhebemechanismus eines Anhängers oder einer Lastkraftwagen-Kastenkonstruktion
Dispositif de levage d'un toit pour une remorque ou une caisse de véhicule utilitaire

(30) Priority: 01.12.1986 GB 8628651
(43) Date of publication of application: 30.09.1987
(73) Proprietor: AVELING BARFORD (MACHINES) PLC, GB-Lincolnshire NG31 6JE (GB)
(72) Inventor: Davis, Robert Clive Browning, Sowerby§Thirsk§North Yorkshire (GB)
(74) Representative: Allen, Oliver John Richard

(56) References cited:
- FR-A- 2 554 062
- FR-A- 2 577 865
- US-A- 2 656 216
- US-A- 3 784 255

## Description

The invention relates to apparatus for raising the roof of a lorry trailer or van body.

It is known to provide lorry trailers with means for raising the roof in order to facilitate easier packing of the trailer with cargo.

U.S. Patent 2656216 describes a load-carrying vehicle, the roof of which is carried on a plurality of rods. Piston and cylinder means are mounted on the walls of the vehicle for raising and lowering the rods to vary the height of the roof.

French Patent 2577865 describes a load-carrying vehicle with a raiseable roof. A piston and cylinder assembly is employed to raise one end of the roof. Cables are connected between that end and the other around pulley wheels whereby the other end is also raised.

Apparatus for raising the roof of a trailer or van body in accordance with the invention including a roof raising mechanism characterised in that the roof raising mechanism comprises a pivotally mounted lever in that the apparatus includes a flexible walled pneumatic actuator operatively connected to the pivotally mounted lever such that a change in the volume of air within the actuator causes pivoting of the lever thereby to raise the roof.

In a trailer which is provided with an air suspension system and/or an air breaking system, the use of a flexible walled pneumatic actuator is advantageous in that air from the air storage tank can be used to operate the roof raising means.

The actuator may be connected between a wall of the trailer or van body and the pivotally mounted lever means, such that the lever is pivoted when the actuator is expanded with air.

Preferably two cables are engaged at the upper end of the lever by the pulley system and two further cables are attached at the lower, "toe" end.

The cables, of which there may, as noted above, be four, are in one embodiment passed over pulleys at the base of the wall of the trailer before running to the corner posts of the roof.

The actuator is preferably supplied with air from an air storage tank which also supplies the suspension system and/or brake system for the trailer or van body. The actuator is filled with air and thus expanded, via a valve which may be operated manually to raise and lower the roof.

The actuator is preferably mounted on a front outer wall of the trailer adjacent the cab of the lorry.

The invention will now be described by way of example with reference to the accompanying drawings in which:-
Figure 1 is a schematic diagram of part of an apparatus in accordance with the invention;
Figure 2 is a plan view of one embodiment of an apparatus for raising the roof of a trailer or van body;
Figure 3 is a front view of the apparatus shown in Figure 2;
Figure 4 is a side view of the apparatus shown in Figure 2;
Figure 5 is a side view of a second embodiment of an apparatus for raising the roof of a trailer or van body in accordance with the invention; and
Figure 6 is a plan view of the apparatus of Figure 5.

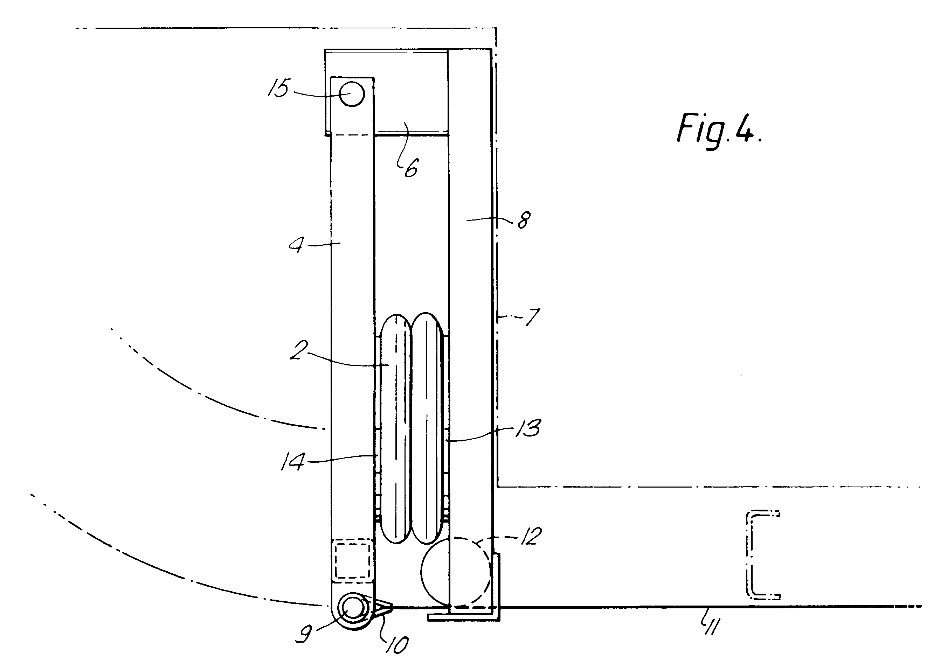

Referring now to Figure 4, a flexible walled pneumatic actuator 2 is shown connected at its rear end to a mounting block 8 via a plate 13, the block 8 being mounted directly on a front wall 7 of a trailer. The front end of the actuator 2 is connected via a plate 14 to a lever 4. The mounting block 8 is provided at its top end with a projecting arm supporting a pin 5. The pin 5 provides the pivoting point for the lever 4.

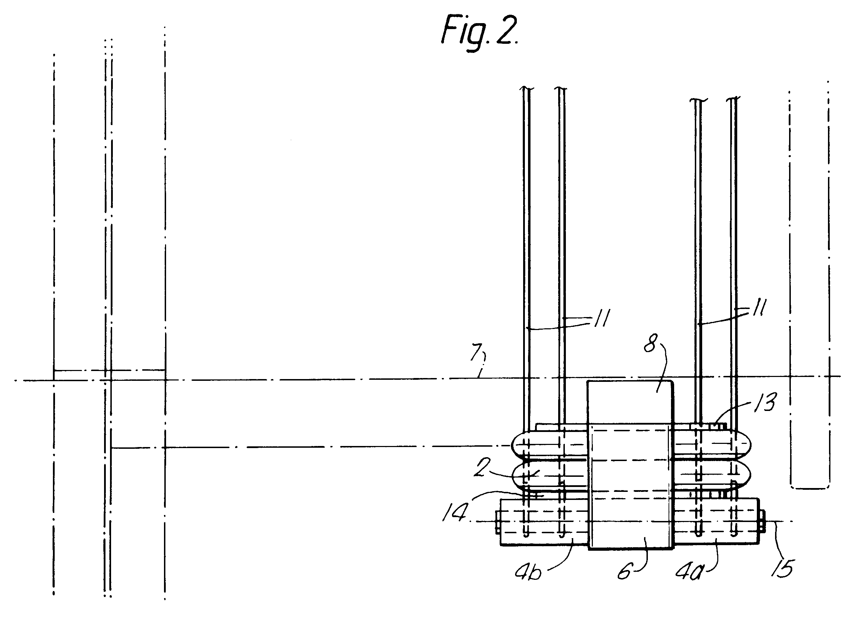

Referring now to Figures 2 and 3, the pivoting lever 4 is split into two members 4a and 4b, one attached on either side of the projecting arm 6 to the pin 5 and arranged such that the lever members may freely pivot about the pin axis 15. The free ends of the lever members 4a and 4b have attached thereto a bar 9 which joins the two members 4a and 4b and prevents them pivoting independently from one another.

The bar 9 is inserted through loops 10 at the end of four cable members marked generally at 11. The cables 11 pass over pulleys 12 at the base of the front wall 7 of the trailer and thence by a series of further pulleys to the corners of the roof of the trailer.

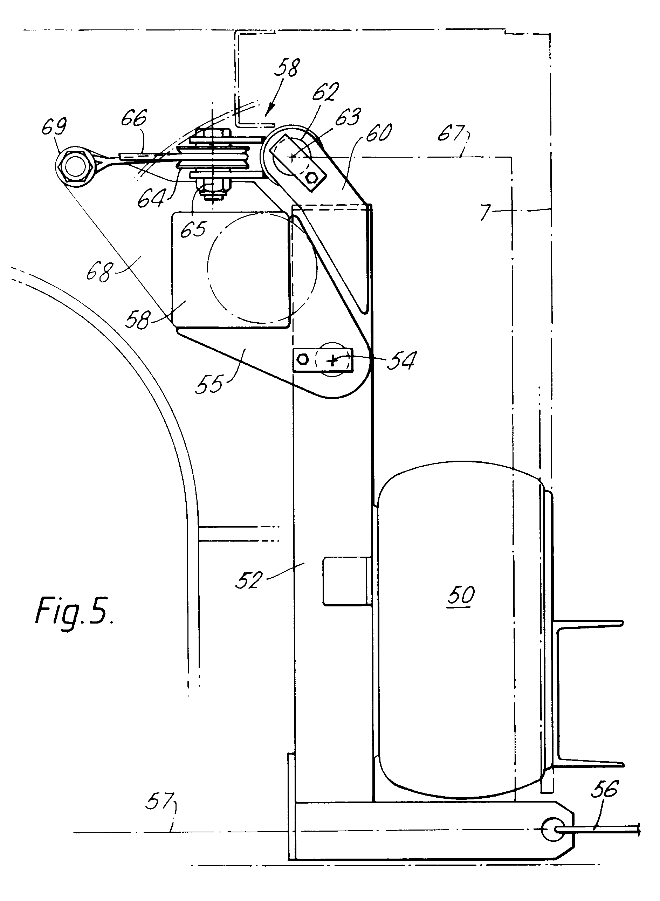

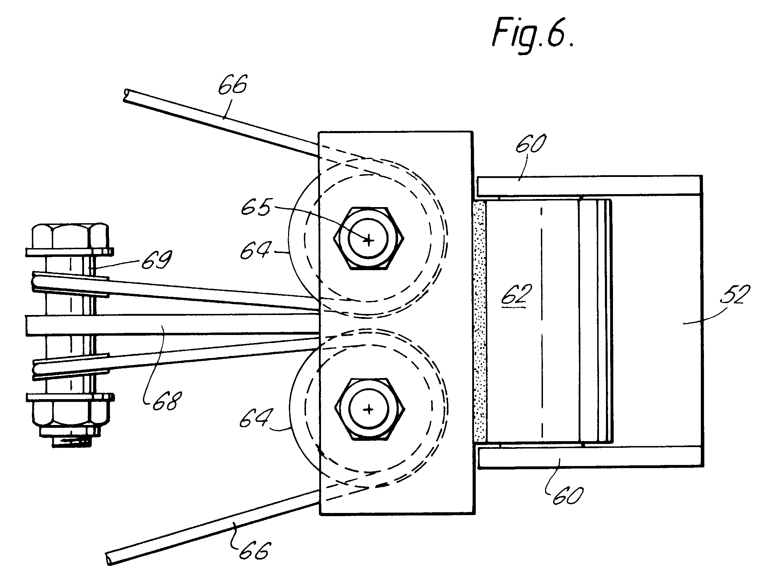

In Figures 5 and 6, apparatus in accordance with the invention is shown having a rolling diaphragm pneumatic actuator 50 connected to a trailer in a similar manner to actuator 2. The front end of the actuator 50 is connected to a pivoting lever 52, which lever is supported about its pivot axis 54 intermediate the free ends of the lever, by a support arm 55 secured to one side of a cross-member 58 of the trailer.

The pivoting lever 52 is basically L-shaped, the "toe" end of which is adapted to carry the looped end of two cable members marked generally at 56 (which pass under the chassis of the trailer to the rear corner posts for lifting the roof). The top end of the lever 52 meanwhile is adapted to carry a pulley system 58 which specifically comprises two lug members 60 mounting an axle 62 (the axis 63 of which is parallel to the pivot axis 54) to which is secured two pulleys 64 (the axis 65 of which is perpendicular to the pivot axis 54). The pulleys 64 (which effectively pivot, firstly, about axis 63 and, secondly, about axis 54 such that they remain substantially horizontally orientated at all times) are arranged to guide and allow movement of the two cable members marked generally at 66, the looped ends of which are carried by an axle 69 mounted by a lug member 68 which is itself secured to the cross-member 58 of the trailer.

The cable members 66 pass under the "stepped" portion of the chassis of the trailer to the front corner posts for lifting the roof.

In operation, air is supplied to the actuator 50 which causes the lever 52 to pivot about the pivot axis 54 such that the lower end of the lever 52 moves to the left (as seen in Figure 4) specifically to pull in the cable members 56, while the upper end of the lever 52 moves to the right specifically to pull in the cable members 66.

The looped end of the cable members 56 are carried on an L-shaped lever 52 since when the latter is in its fully pivoted position, the "toe" end of the lever 52 is still positioned on the same initial horizontal line (see 57) whereby no contact of the cable members 56 with the base of the actuator 50 is achieved. The cable members 66 meanwhile are carried by a pulley system 58 which is pivotal about the axis 63, the axis 63 being vertically offset from the axis 54 whereby when the lever 52 is in its fully pivoted position, the pulleys 64 are still positioned substantially on the same initial horizontal line (see 67).

The cable members 56 and 66 are provided with adjusting means (not shown) in order to adjust when necessary the overall length of the cable members.

The lever 52 is provided with restraining cables (not shown) to prevent the actuator 50 from moving the lever 52 beyond a pre-determined distance.

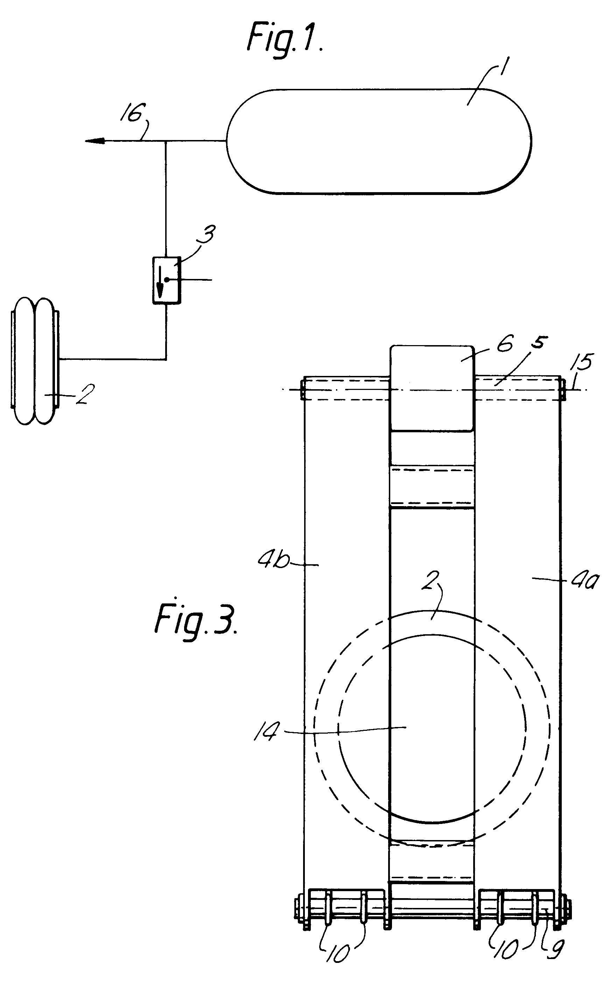

To operate the roof lifting apparatus, air is supplied to the actuator 2 or 50 from the air tank 1 (shown in Figure 1) by manually opening a stopcock valve 3. The air tank 1 also supplies air via the line 16 to the air suspension system and/or air brake system (not shown) of the trailer.

As air is supplied to the actuator 2 or 50, such expands causing the lever 4 or 52 attached thereto to pivot away from the wall 7 of the trailer pulling the cables and thus raising the roof.

## Claims

1. Apparatus for raising the roof of a trailer or van body comprising a roof raising mechanism including cables (56, 66), characterised in that the roof raising mechanism further comprises an L-shaped lever (52) pivotally mounted intermediate its ends such that the "toe" end is positioned below the other end, at least a first cable (56) being attached to the lower, "toe" end and at least a second cable (66) being engaged at the other, upper, end by a pulley system (58) which is pivotally mounted about an axis (63) offset from the pivot axis (54) of the lever (52), the cables (56, 66) when pulled by pivoting of the lever (52) causing raising of the roof, and in that the apparatus includes a flexible walled pneumatic actuator (50) operatively connected to the lever (52) such that a change in the volume of air within the actuator (50) causes pivoting of the lever (52) thereby to raise the roof.

2. Apparatus as claimed in Claim 1, wherein two cables (56) are attached to the lower end of the lever (52) and two cables (66) are engaged at the upper end by the pulley system (58), the cables (56, 66) extending to the corners of the roof.

3. Apparatus as claimed in either Claim 1 or Claim 2, wherein the pulley system (58) comprises an axle (62), the axis (63) of which is parallel to the lever pivot axis (54), and a pulley (64) for the or each second cable (66), the axis of which is perpendicular to the lever pivot axis (54).

4. Apparatus as claimed in any preceding Claim, wherein the flexible walled pneumatic actuator (50) is supplied with air from an air storage tank which also supplies the suspension system and/or brake system of the trailer or van body.

5. Apparatus as claimed in any preceding Claim, wherein the flexible walled pneumatic actuator (50) is connected to a wall (7) of the trailer or van body.

## Patentansprüche

1. Dachhebeeinrichtung eines Anhängers oder Lastkraftwagenkastens, die einen Dachhebemechanismus umfaßt, einschließlich Kabel (56, 66),
dadurch gekennzeichnet,
daß der Dachhebemechanismus weiterhin einen L-förmigen Hebel (52) aufweist, der schwenkbar zwischen seinen Enden angeordnet ist, so daß das kurze Ende unter dem anderen Ende positioniert ist, zumindest ein erstes Kabel (56) an dem unteren kurzen Ende befestigt ist und zumindest ein zweites Kabel (66) in Eingriff mit dem anderen, oberen Ende durch ein Führungsrollensystem (58) steht, das um eine Achse (63) schwenkbar befestigt ist, versetzt von der Schwenkachse (54) des Hebels (52), daß die Kabel (56, 66), wenn sie durch die Schwenkung des Hebels (52) gezogen werden, ein Abheben des Daches bewirken und daß die Einrichtung einen pneumatischen Arbeitszylinder mit flexibler Wand (50) einschließt, der arbeitsmäßig mit dem Hebel (52) in der Weise verbunden ist, daß eine Änderung des Luftvolumens in dem Arbeitszylinder (50) bewirkt, daß der Hebel schwenkt und sich dadurch das Dach hebt.

2. Einrichtung gemäß Anspruch 1,
wobei zwei Kabel (56) an dem unteren Ende des Hebels (52) befestigt sind und zwei Kabel (66) in Eingriff mit dessen oberen Ende durch das Führungsrollensystem (58) stehen und die Kabel (56, 66) an die Ecken des Daches führen.

3. Einrichtung nach Anspruch 1 oder 2,
wobei das Führungsrollensystem (58) eine Welle (62) aufweist, deren Achse (63) parallel zu der Hebeldrehachse (54) verläuft, und eine Führungsrolle (64) für das oder jedes zweite Kabel (66), deren Achse senkrecht zu der Hebeldrehachse (54) verläuft.

4. Einrichtung nach einem der vorstehenden Ansprüche,
wobei der pneumatische Arbeitszylinder mit flexibler Wand (50) mit Luft von einem Luftspeichertank beliefert wird, der ebenso das Federungs- und/oder das Bremssystem des Anhängers oder des Lastkraftwagenkastens beliefert.

5. Einrichtung nach einem der vorstehenden Ansprüche,
wobei der pneumatische Arbeitszylinder mit flexibler Wand (50) mit einer Wand (7) des Anhängers oder des Lastkraftwagenkastens verbunden ist.

## Revendications

1. Dispositif de levage d'un toit pour remorque ou corps de véhicule industriel comprenant un mécanisme de levage du toit qui comporte des câbles (56, 66), caractérisé en ce que le mécanisme de levage du toit comprend encore un levier (52) en forme de L monté à pivotement en un point intermédiaire entre ses extrémités de sorte que l'extrémité "inférieure" soit placée en dessous de l'autre extrémité, au moins un premier câble (56) étant attaché à l'extrémité inférieure, et au moins un second câble (66) étant en prise à l'autre extrémité supérieure, avec un système de poulie (58) qui est monté à pivotement autour d'un axe (63) décalé par rapport à l'axe de pivotement (54) du levier (52), les câbles (56, 66), lorsqu'ils sont tirés par le pivotement du levier (52), entraînant le levage du toit, et en ce que l'appareil comprend un actionneur pneumatique (50) à paroi souple fonctionnellement connecté au levier (52) de sorte qu'une modification du volume d'air contenu dans l'actionneur (50) provoque le pivotement du levier (52) et par conséquent le soulèvement du toit.

2. Dispositif selon la revendication 1, dans lequel deux câbles (56) sont fixés à l'extrémité inférieure du levier (52) et deux câbles (66) sont en prise à l'extrémité supérieure avec le système de poulie (58), les câbles (56, 66) s'étendant jusqu'aux angles du toit.

3. Dispositif selon la revendication 1 ou 2, dans lequel le système de poulie (58) comprend un essieu (62), dont l'axe (63) est parallèle à l'axe de pivotement (54) du levier, et une poulie (64) pour le ou chaque second câble (66), dont l'axe est perpendiculaire à l'axe de pivotement (54) du levier.

4. Dispositif selon l'une quelconque des revendications précédentes, dans lequel l'actionneur pneumatique (50) à paroi souple reçoit de l'air venant d'un réservoir de stockage d'air qui alimente également le système de suspension et/ou le système de frein de la remorque ou du véhicule utilitaire.

5. Dispositif selon l'une quelconque des revendications précédentes, dans lequel l'actionneur pneumatique (50) à paroi souple est relié à une paroi (7) de la remorque ou du véhicule utilitaire.
